Europäisches Patentamt

European Patent Office

Office européen des brevets

(11) Publication number: **0 078 033**
**B1**

(12) **EUROPEAN PATENT SPECIFICATION**

(45) Date of publication of patent specification: **30.07.86**

(51) Int. Cl.⁴: **C 02 F 3/32**

(21) Application number: **82109776.3**

(22) Date of filing: **22.10.82**

(54) **Improved continuous process and plant for tertiary photobiological treatment of waste water.**

(30) Priority: **28.10.81 IT 4167781**
**07.09.82 IT 2314582**

(43) Date of publication of application:
**04.05.83 Bulletin 83/18**

(45) Publication of the grant of the patent:
**30.07.86 Bulletin 86/31**

(84) Designated Contracting States:
**AT BE CH DE FR GB IT LI LU NL**

(56) References cited:
**FR-A-2 238 675**
**US-A-3 462 360**
**US-A-3 732 089**
**US-A-3 768 200**
**US-A-3 955 318**

(73) Proprietor: **S.C.R.A.M.B.L.E. S.r.l.**
**Via Alessio 19**
**I-35100 Padova (IT)**

(72) Inventor: **Rastrelli, Alessandro**
**Via Vergerio, 54**
**I-35100 Padova (IT)**
Inventor: **Zannini, Luigi**
**Via S. Pietro, 29**
**I-35100 Padova (IT)**

(74) Representative: **Dr. Ing. A. Racheli & C.**
**Viale San Michele del Carso, 4**
**I-20144 Milano (IT)**

Courier Press, Leamington Spa, England.

## Description

The present invention concerns a continuous photobiological process and plant for the tertiary treatment of waste waters, e.g. farmyard waste, still containing not acceptable amount of phosphorous and nitrogen, without waste effluent.

As known, the so called tertiary treatment is applied to waste waters, which were already submitted to several mechanical and/or biological ("primary" and "secondary") treatments allowing the purifying from several, particularly organic, but also inorganic, polluting agents, however not sufficiently from nitrogen and phosphorous.

On the other hand the presence of these elements, in too high amounts, in the waste water, causes the eutrophy phenomenon in the receptor bodies which gives rise to an excessive proliferation of seaweeds and water plants, so subtracting oxygen from the waters to such a degree that every life form is inhibited.

In order to obviate to this serious drawback, several processes, the so called tertiary processes, were devised, apt to allow the complete water reclamation. The solution was searched through various ways: by means of mechanical, biological processes (e.g. lagooning, employment of "Eichornia Crassipes") and particularly of various chemical and chemical-physical processes (e.g. coagulation, filtration, adsorption, sterilization).

A wide literature is already known dealing with the problem of waste water tertiary treatment and in particular with the plant to carry on this treatment.

However the prior art plant generally involve long times for the processes to be carried out, wide land areas and/or high power waste, so that they result too expensive.

For example, U.S.—A—3462360 to Ross E. Mc Kinney, discloses a discontinuous process and plant for waste water treatment, the plant essentially comprising an open topped tank and a sedimenting basin; the tank is constructed and arranged so as to cause, by means of a rotating wheel, an algae—waste water mixture to flow in a general circular path in a horizontal direction; means (as a bottom baffle) being provided to move the algae-waste water mixture generally up and down in a vertical direction. The settling basin defines a quiescent liquid zone apt to cause algae to sedimentate by self-flocculation.

Evidently this plant needs a large plant overall dimension and long working time; it is not apt to give a very valuable biomass. Evidently all this falls on the economy of the process to be carried out in this plant.

U.S.—A—3955318 to Hulls discloses a method and device to produce an algae product high in protein and purify waste waters to provide clear water. The photobiological reaction takes place in a stationary, generally rectangular opaque tank open at the top, for exposure to the light, one side wall of the plant is in the form of a curved section, generally shaped like the curve generated by translation of a parabola; horizontally disposed means being provided to inject fluid (air and carbon-dioxide) into the tank to impel fluid to move up said side wall with lenticular flow. In a preferred working method, a mechanical circulation is proposed, which is obtained by a series of gas injectors being placed horizontally along the bottom of the open top reaction tank. The settled biomass is separated by centrifugation to give concentrated algae, a part of which can be recycled as algae input to the reaction tank.

It appears that also this plant is toilsome from a technical point of view and expensive.

Furthermore both the cited prior art foresee a means to recycle part of the finally obtained biomass. This represents an anti-economic device in that the biomass, obtained as described there, is formed part of mature (ripe) and part of immature (unripe) biomass; therefore its recycle leads to a depreciation of the recycled mature (ripe) biomass part and to an uncomplete exploitation of the discharged immature (unripe) one.

However the known processes generally need long times, wide land areas and/or involve high power waste. Essentially they are too expensive.

Therefore the aim of the present invention consists of a photobiological process and plant, which allow to carry out a tertiary treatment of previously treated waste water without waste effluent, namely not only with abatement of the still present nitrogen and phosphorous polluting agents, but also reusing the whole effluents (water and biomass) either recycling them to the same process, or reusing them outside.

The purpose of this invention is also a plant which allows to carry out, as simply and effectively as possible, the process of this invention so as to clearly differ from the prior art in a very low power demand, reduced overall dimensions, high yield and consequently the greatest economy.

This invention is an improvement of the process claimed in the Italian application N. 41.677 A/81 (filed 28.10. 1981; the priority of said application is invoked in the present European patent application) to the same inventors of this invention, wherein a photobiological process and plant were claimed for abating nitrogen and phosphorous from waste waters and recovering the biomass, wherein photosynthetical microorganisms, added with B vitamins and oligoelements, are caused to use the nitrogen and phosphorous of the waste water, in an aerated and illuminated ambient, forming a lot of biomass, available for its content of protein, carbohydrates, lipids and chlorophyl.

Afterwards, the subject of the above application was submitted to a deeper research in order to set up the optimum reciprocal component ratios of this photobiological synthesis so as to control it as simply, effectively and economically as possible to reach the most complete abatement of nitrogen and phosphorous and at the same time, the production of a useful biomass, the components of which would be more valuable not only in the agricultural field.

Therefore the present invention is an improvement of the preceding one, particularly a setting of the factors intervening in the treatment, so as to allow a careful control of the same and the carrying out of the process on a large scale and on clearly competitive base with respect to the prior art, as far as known.

The present process is characterized in that, first a particular photosynthetical seaweed (species: Phycophyteae; genus: Green seaweeds) is carefully selected, owing to its hereinafter specified pecularity and secondly in that it is caused to react in an optimum ambient, apt to its abundant proliferation, particularly for the presence of nutrient factors, necessary for microorganism growth and multiplication, namely of B-vitamins and oligoelements if not present (as Fe, Co, Cu, Zn, Mn, Mo and others), which are preliminarily added in microamounts to the ambient, also being supplemented with intense lighting, (sunlight or artifical light) and aeration, at the optimum temperature of between +15°C and +30°C, which promote a speedy development of the photosynthetical microorganisms (of the biomass), at a pH from about 6,5 to 8 and during a residence time of the waste water in the reaction ambient, in contact with the biological reactant, which is established, based on the water to be treated and on the microorganism (seaweed) used for the photobiological treatment.

Said seaweed is chosen on the basis of its following favourable morphological characteristics, namely:

1) dimensions: at ripeness, they are 200 μm×30 μm±50%, to allow an easy filtering and therefore the biomass recovery.

2) biomass composition: it permits for the recovery of a high content of proteins and lipids, the average composition of the whole dry mass (i.e. 0,7—1,0 mg/$10^6$ cells) being the following:

|  | mg/$10^6$ cells |
|---|---|
| proteins | 0,2—0,4 |
| carbohydrates | 0,004—0,4 |
| lipids | 0,11—0,3 |
| chlorophyl | 0—0,035 |

3) resistance to high doses of ionogenic radiations and concentration capacity up to $10^2$ times from the ambient of some radionuclides;

4) wide distribution in a lot of various ambients, this permitting to select from time to time the more convenient stock according to the waters to be treated.

5) good resistance to the environment variations, also surviving under unfavourable conditions.

6) not strictly binding nutrient requirements, in the medium in which it develops, but for the presence of B-vitamins and oligoelements (the last, to be integrated in the medium if insufficient or absent) in a concentration of 0,5 · $10^{-4}$ mg/l—1 mg/l.

To achieve good growth conditions it is also necessary that the system should be well aerated with air or air containing up to 5% of $CO_2$.

Moreover, since the selected seaweed is a photosynthetical microorganism, it obviously needs light for the growth and for the carrying out of its metabolic activities. However the seaweed does not seem to be particularly sensitive to some wave lengths, in connection with its growth, provided that excessive ultraviolet ray doses are avoided. This seaweed grows well in the presence of sun light and of artificial light, e.g. from fluorescent or incandescent lamps.

This last characteristic is not to be undervalued as it allows the use of the present process, through integration with artificial light, also in geographical zones, where the natural light periods are too short.

Practically the optimum light intensity intervals, necessary to the growth of these seaweeds, are of 400—3000 ft-c (4305—32291 lux).

Although the described seaweed was essentially used up to now, the possibility of using also different seaweed type is in course of study.

Before describing the process of this invention in detail, to the aim of understanding the same easier, we shall hereinafter describe the plant.

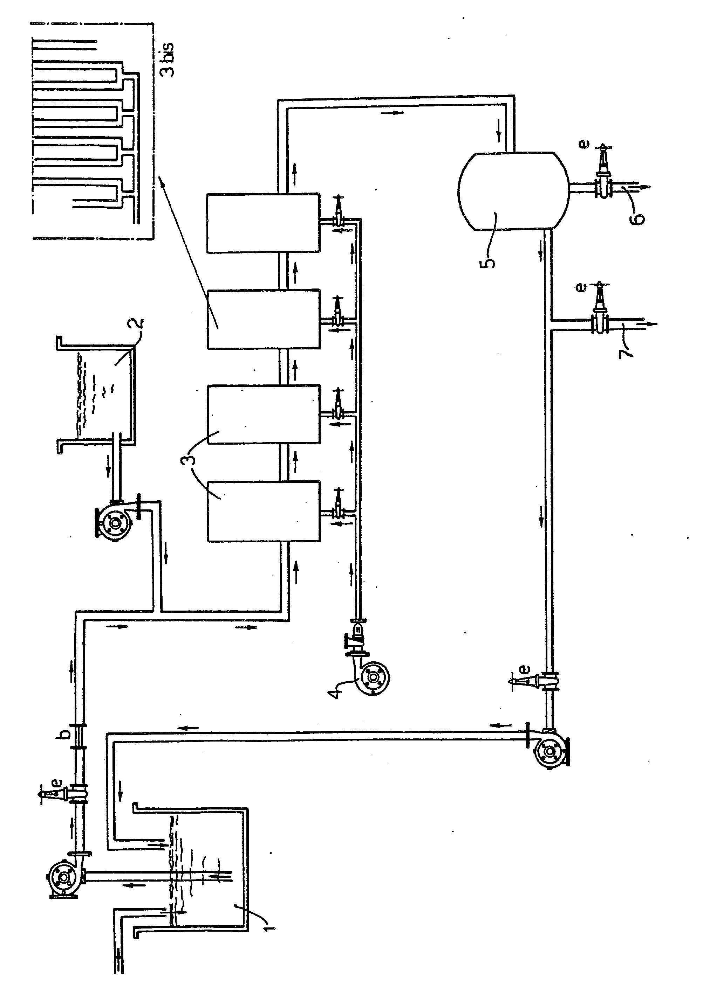

The plant for carrying out the continuous tertiary treatment of waste waters, containing nitrogen and phosphorous, according to the present invention, is schematized in the enclosed drawing.

It consists of three zones: the first zone comprises an automatically controlled level tank (1), (for example a float level tank), collecting the waste waters to be treated, from which the waste waters are delivered to the second zone by means of a submersible pump, through a line tubing having a flow shut off sluice valve (e) adjusting the rate of flow and the residence times in the reaction zone; it also comprises a B-vitamin feeding and dosing device (2), which is inserted in the piping connecting the first and the second zone, and it consists of a concentrated B-vitamin solution reservoir and of a vitamin dosing pump.

The automatic tank 1 level control can be also carried out by means of a capacitive electronic or a conducibility system or by means of an ultrasound system.

A tubing connects the first to the second zone (3), where the photobiological reaction takes place in a multiple reactor, consisting of modular, particularly of tubular, units each having twenty transparent elements, particularly of φ15×210 cm, vertically arranged on a lattice framework and connected one to the other by means of plastic material connecting bends, so as to lead to a serpentine or coil like flow.

At the base of each element couple (3 bis) an air diffuser is inserted, provided with a rate of flow control valve and connected with a compressed air delivering device (4), apt to supply the system with the required aeration.

As modular elements, plate elements can also be used.

As transparent material any building material can be used, which allows a convenient lighting and aeration of the seaweed water system, consistently with sufficiently long residence times, for example glass, acrylic, polycarbonate, polystyrene material.

Downstream of the reaction units, a tank collects the effluents, which are thereafter caused to flow, by means of an automatic float controlled submersible pump, to a third zone, where the separation, preferably filtration, and a discharge take place.

The third zone is characterized by the presence of two separating elements, preferably two filters in series (5), having a filtering capacity of 150 μm and 20 μm respectively: the first one retains only the "mature biomass", of greater dimension; the immature biomass, having smaller dimensions than the nominal porosity of the first filter and being capable of further reaction, remaining in the filtrate.

The filtrate from the first filter passes them to a valve, which divides it into two flows: one of them is recycled to the plant top for a further reaction, the other is delivered to the second filter (of 20 μm), which retains the still remained microorganisms · and discharges the completely reclaimed water, which is available in the same plant or outside or is dischargeable without any pollution danger.

For the filtration, sack filters offer important, particularly economical, advantages (see ex. 2) and therefore they are preferred; however it is also possible to have recourse to another filter type, as vacuum rotating filters or to another separation system, which could meet particular requirements, for example to the centrifugation. However the latter systems are not as economical as the filters.

This plant is fit for an easy automatization by appropriately inserting suitable known devices.

The above will be better understood from the following examples, which are intended to be only illustrative, but not limiting the invention.

Example 1—Laboratory process for the abatement of nitrogen and phosphorous from waste waters fed to a tertiary treatment.

Laboratory tests were carried out to verify the efficiency of the photosynthetic seaweeds according to the present invention for the purification of waste waters containing a polluting agent charge of nitrogen and phosphorous higher than the tolerance limits according to the Italian legislation ([P] 10 mg/l and $[N]_t$ (ammoniacal+nitric+nitrous)=35,6 mg/l). A waste water was chosen from a two step anaerobic—aerobic biological purifying plant, having the following characteristics:

pH=7,3      T=19°C

$BOD_5$=38 mg/l      $[P]_{tot}$=9,2 mg/l

COD=96 mg/l      $[N]_{tot}$=28 mg/l

To this water were added $PO_4^{\equiv}$ and $NH_4^+$ in such an amount to have final concentrations of 14 mg/l of $PO_4^{\equiv}$ and 45 mg/l of $N_{(t)}$. Preliminary tests of the water fertility with regard to the photosynthetic seaweed were then carried out: variable amount of B-vitamins were added to 100 ml portions of water in 250 cc flasks, then the waters were inoculated with fixed amounts of microorganisms from standard cultures, and incubated at ambient temperature, under sun light.

It was found out that, when the vitamins were absent, no growth had taken place; on the contrary, an optimum growth was obtained with B-vitamin (and oligoelement) concentrations from $0,15.10^{-4}$ mg/l to 0,5 mg/l.

Afterwards the nitrogen (N) and phosphorous (P) abatement was valued by supplying 500 ml portions of water in a 1 litre flask, provided with an air injection device and containing centrifugated and washed seaweeds from standard cultures, and optimum amounts of B group vitamins. The tests were carried out at 20°C, under normal light conditions.

From the experiments the best conditions for an efficient polluting agent abatement resulted to be the following: seaweeds—waste water contact time (residence in the reactor) . . .6 h; air flow 0,4 l/min±30%.

The following results were obtained in the above conditions:

$[P]_{final}$=5,5 mg/l corresponding to about 60%
$[N]_{t\ final}$=21,5 mg/l corresponding to about 50%.

Example 2—Process according to the present invention as carried out in a pilot plant.

A pilot plant for the treatment up to about 0,5 $m^3$/h waste water was planned and carried out on the basis experiments of example 1.

Hereinafter the tertiary treatment of waste waters according to the present invention will be described as carried out in the new plant devised for this purpose and drawn out in the enclosed schema.

As from the above, the process is carried out in three steps: in the first one the waste waters to be reclaimed, containing nitrogen and phosphorous from an anaerobic purification, are fed to an automatically controlled level collecting tank (1) of the first plant zone, wherefrom it is delivered, through a piping, leading to the second zone and having inserted the B-vitamin reservoir (2) and the dosing pump, by means of which a micro-amount of B-vitamins, and, if necessary, of oligoelements, calculated based on the waste water input, are previously supplied to the water. The rate of flow and the residence times are conveniently controlled by means of flow shut off sluice valves (e).

The water, containing the vitamins, passes sequentially to the second zone (3) of the plant, in the multiple reactor where serpentine like flowing through four units, each consisting of 20 transparent acrylic tubes (φ15×210 cm), connected one to another and intensely illuminated, is submitted to a photobiological reaction, at a temperature of 20°C, in the presence of an air flux, supplied and diffused from the bottom in a dosed amount as required.

The above number of photobiological units was calculated for a treatment of about 0,5 m³/h. However the unit number can be greater if the optimum conditions for treating also much greater water amounts are carried out.

The acrylic material of the transparent tubes can be replaced by any other suitable material.

The effluent from the photobiological reaction is afterwards collected in a tank downstream the photobiological units, wherefrom it is delivered to the third zone by means of a submersed pump, provided with an automatic float control, namely to a unit consisting of two sack filters in series, having a nominal filtering capacity of 150 µm and 20 µm respectively.

The first one, of 150 µm, separates the no longer reactive, mature biomass; the filtrate containing the immature biomass of smaller sizes than the nominal filter porosity is divided, through a valve, in two streams: one recycling upstream to the first zone the immature biomass, so that the purifying capacity of the same will be completely exploited; the other stream, passing through the second filter (of 20 µm), is nearly completely deprived from the still present microorganisms and flows therefrom as completely reclaimed water.

The above plant can be easily automatized as known.

The so obtained biomass represents a valuable product to the components of which important prospects are offered, as already remarked, in wide fields of consumption, particularly for feed integrators and for fertilizers in agriculture as well as in other industries, either as raw materials or as components of elaborated compositions.

From the above the novelty of the claimed invention is evident as it results from the achievable advantages which we think useful to recapitulate hereinafter once more:

— simple processing, not only without waste but also with the recovering of the polluting agents (N,P), the reactants (biomass), and of the waste water (recycling of the reclaimed water).
— use of inexpensive reactants
— very low power demand
— very limited overall dimensions and plant simplicity
— possibility of using the process also in zones with limited natural lighting.

All the above finally leads to a sensitive cost reduction.

## Claims

1. An improved continuous process for the tertiary photobiological treatment of waste waters, containing nitrogen and phosphorous, which were previously added with microamounts of from $0,5.10^{-4}$ mg/l to 1 mg/l of B-vitamins and oligoelements (if not present) and are submitted to the metabolic action of carefully selected photosynthetic microorganisms of the Phycophyteae species, Green seaweeds genus, at a temperature of from +15°C to +30°C, at a pH between 6,5 and 8, in a strongly aerated and illuminated ambient, the light intensity being 400—3000 ft-c (4305—32291 lux), during a contact time experimentally set according to the composition of the waste water to be treated and the particularly used microorganism, characterized in that the photobiological agent (algae) is selected based on morphological criteria so as to have at ripeness the following morphological characteristics: a) dimensions apt to an easy filtering, being at ripeness, 200 µm×30 µm±50%; b) high content of proteins and lipids, corresponding the average composition of the whole (dry) biomass—i.e. $0,7—1,0$ mg/$10^6$ cells to proteins 0,2—0,4 carbohydrates 0,004—0,4, lipids 0,11—0,3 and chlorophyl 0—0,035 mg/$10^6$ cells; c) resistance to high doses of ionogenic radiations and concentration capacity up to $10^2$ times of some radionuclides from the ambient; d) wide availability in various natural ambients; e) good resistance to environment variations; f) not strictly limiting nutrient requirements except for the concentration of B-vitamins and some oligoelements in the medium; and in that the algal biomass is separated from the treated waste water with the aid of two filters in series, the first filter retaining only the mature biomass, which is recovered, and the second filter retaining the immature biomass, which is recycled to the reaction zone together with a part of the reclaimed water.

2. A plant for a continuous tertiary treatment of waste waters, containing nitrogen and phosphorous, including a feed and controlling zone, a reacting zone and a separation zone, the feed zone comprising: a) an automatically controlled level tank (1), collecting the water to be treated and delivering the same to the second zone, by means of a submersible pump, through a line tubing provided with a flow shut off sluice valve (e), adjusting the waste water rate of flow and the residence times in the reaction zone, a small B-vitamin and oligoelements feeding and dosing device (2), being inserted on said tubing, which feeds a B-vitamin concentrated solution to the waste water before the photobiologic reaction takes place; characterized in that the reacting zone comprises a multiple reactor, formed of vertically arranged, transparent modular reaction units, which are shaped so as to lead the waste water, added with B-vitamins, oligoelements and carefully selected photosynthetic microorganisms, to a serpentine like flow, the reaction units being provided with air injecting means from the bottom; means for a 400—3000 ft-c (4305—32291 lux) lighting, means to keep a temperature of from +15°C to 30°C, means to maintain a pH of 6,5 to 8 being also provided; a tubing allowing the treated water to flow from the photobiological reactors to a collecting tank downstream the reactor, and therefrom, by means of an automatic float controlled submersible pump, to the separation zone, which separation zone comprises a double filter separating system, which separates the immature biomass and the mature biomass from the reclaimed water and is provided to recycle the unripe biomass and part of the reclaimed water upstream of the plant and to discharge a valuable ripe biomass and a completely reclaimed water from the plant.

3. A plant according to claim 2, characterized in that the photobiological agent is sorted out based on a morphological cryterium namely owing to the following morphological characteristics: a) dimensions apt to an easy filtering, being, at ripeness, 200 µm×30 µm±50%; b) high content of proteins and lipids, corresponding the average composition of the whole (dry) biomass—i.e. 0,7—1,0 mg/10⁶ cells to proteins 0,2—0,4, carbohydrates 0,004—0,4, lipids 0,11—0,3 and chlorophyl 0,035 mg/10⁶ cells; c) resistance to high doses of ionogenic radiations and concentration capacity up to $10^2$ times of some radionuclides from the ambient; d) wide availability in various natural ambients; e) good resistance to environment variations; f) not strictly limiting nutrient requirements except for the concentration of B-vitamins and some oligoelements in the medium.

4. A plant according to claim 2, characterized in that the automatic control is carried out by means of a float system.

5. A plant according to claim 2, characterized in that the automatic control is carried out by means of an electronic system selected from the group consisting of a capacitive and conductive type.

6. A plant according to claim 2, characterized in that the automatic control is carried out by means of ultra-sounds.

7. A plant according to claim 2, wherein each modular unit consists of twenty transparent elements, and the units are arranged on a lattice framework and connected to each other by means of plastic material connecting bends so as to lead the water to a serpentine like flow, and at the base of each element couple (3 bis) an air diffuser is inserted, provided with a rate of flow control valve and connected to a compressed air delivery device (4), apt to supply the system with the required aeration.

8. A plant according to claim 7, characterized in that the transparent modular elements are tubular.

9. A plant according to claim 7, characterized in that the modular elements are constructed of plates.

10. A plant according to claim 7, characterized in that the transparent material of the reactor modular elements is selected from the group consisting of glass, acrylic, polycarbonate and polystyrene materials.

11. A plant according to claim 2, characterized in that the separation of the biomass and the reacted water takes place by means of filters, selected from the group consisting of sack filters and vacuum rotating filters.

12. A plant according to claim 11, characterized in that two filters in series and intermediate valve system are provided, the filters having a filtering capacity of 150 µm and 20 µm respectively and the valve being apt to separate in two flows the filtrate from the first filter—which retains the mature biomass—and to recycle one of said flows upstream to the first zone and to deliver the other flow to the second filter, which separates the residual immature biomass from the reclaimed water, means being also provided to recycle up to the plant the immature biomass and to discharge the recovered mature biomass as a wholly mature biomass, apt to give valuable protein, carbohydrates, lipids and chlorophyl.

**Patentansprüche**

1. Verbessertes kontinuierliches Verfahren zur tertiären Behandlung mittels Fotosynthese von Stickstoff und Phosphor enthaltendes Abwasser, bei dem in einer ersten Stufe dem Abwasser vorher Mikroquantitäten von $0,5.10^{-4}$ mg/l bis 1 mg/l Vitamine der Gruppe B und (falls nicht vorhanden) Spurenelemente zugesetzt und einem Stoffwechselvorgang von fotosyntetischen genau ausgewählten Mikroorganismen der Art der Phykophytäen, der grünen Algen bei einer Temperatur von +15°C bis +30°C und einen pH Wert von 6,5 bis 8 in reichlich gelüfteter und beleuchteter Umgebung, bei einer Lichtstärke von 400 bis 3000 ft-c (4305—32291 lux) für eine versuchsweise eingestellte Kontaktzeit aufgrund der Komposition des zu behandelnden Abwassers und der besonders verwendeten Mikroorganismen, beigesetzt sind, dadurch gekennzeichnet, daß das fotobiologische Agens (Algen) aufgrund morfologischer Kriterien gewählt ist, um bei der Prüfung die folgenden morfologischen Merkmale aufzuweisen:

a) Ausmaße, die eine leichte Filtration ermöglichen und bei Ausreifung 200 µm×30 µm±50% entsprechen;

b) hoher Gehalt an Protein und Lipoid, wobei die durchschnittliche Komposition der gesamten (trockenen) Biomasse z.B. von 0,7—1,0 mg/10⁶ Zellen, 0,2—0,4 Proteinzellen, 0,004—0,4 Kohlehydratzellen, 0,11—0,3 Lipoidzellen und 0—0,035 mg/10⁶ Chlorophyllzellen entspricht;

c) Widerstandsfähigkeit gegen hohe Dosen von ionisierenden Strahlen und Konzentrationsfähigkeit bis zu $10^2$ mal aus der Umgebung einiger Radionukliden;

d) weitgehende Verfügbarkeit in verschiedenen natürlichen Umgebungen;

e) guter Widerstand gegen Umweltsveränderungen;

f) nicht eng begrenzte Ernährungsanforderungen mit Ausnahme der Konzentration durch Vitamine der Gruppe B und einiger Spurenlemente und dadurch daß die Algen enthaltende Biomasse vom behandelten Abwasser durch zwei hintereinander geschaltete Filter getrennt wird, wobei der erste nur die reife Biomasse, die zurückgewonnen wird, und der zweite die unreife Biomasse, die zur Reakionszone mit einem Teil des rückgewonnen Wassers zurückgeführt wird, zurückhält.

2. Anlage zur kontinuierlichen tertiären Behandlung von Stickstoff und Phosphor enthaltendes Abwasser, die einen Zuführungs- und Kontrollbereich, einen Reaktionsbereich und einen Abscheidungsbereich umfasst, wobei a) der Zuführungsbereich einen Tank (1) mit automatisch kontrolliertem Stand aufweist, in dem das zu behandelnde Wasser gesammelt wird und von dem es in einen zweiten Bereich mittels einer Unterwasserpumpe durch eine Rohrleitung geführt wird, die mit einem Schieberventil (2) zum Absperren des Stromes versehen ist, das den Durchfluß und die Verharrzeit des Abwassers in der Reaktionszone reguliert, und eine kleine Zuführungs- und Dosierungsvorrichtung (2) für die Vitamine B und die Spurenelemente in der Rohrleitung angeordnet ist, die dem Abwasser eine konzentrierte Vitamin-B-Lösung zuführt ehe die fotobiologische Reaktion stattfindet, dadurch gekennzeichnet, daß der Reaktionsbereich einen Multireaktor aufweist, der aus transparenten senkrecht angeordneten Reaktionsbausteineinheiten gebildet ist, die so ausgestaltet sind, daß sie ein schlangenförmiges Strömen des mit Vitaminen B, Spurenelementen und genau ausgewählten fotosynthetischen Mikroorganismen beaufschlagten Abwassers ermöglichen, wobei diese Reaktionseinheiten mit Mittel zum Einblasen der Luft von unten versehen sind, und weiterhin Mittel zur Beleuchtung von 400—3000 ft-c (4305—32291 lux), Mittel zum Einhalten einer Temperatur von +15°C bis 30°C, Mittel zum Einhalten des pH-Wertes von 6,5 bis 8 vorgesehen sind und eine Rohrleitung, die das von den fotobiologischen Reaktoren behandelte Wasser zu einem nach dem Reaktor angeordneten Sammelbecken und von da aus durch eine Unterwasserpumpe mit automatischer Schwimmerregelung zum Abscheidungsbereich fliessen läßt, der ein doppeltes Filtersystem aufweist, das die unreife Biomasse und die reife Biomasse vom gereinigten Wasser abscheidet, wobei die Rückführung der unreifen Biomasse und des Teils des vergüteten Wassers vor der Anlage und die Entladung der wertvollen reifen Biomasse und des vollständig gereinigten Wassers aus der Anlage vorgesehen ist.

3. Anlage nach Anspruch 2, dadurch gekennzeichnet, daß das fotobiologische Agens aufgrund eines morfologischen Kriterium und besonders aufgrund der folgenden morfologischen Merkmale ausgewählt ist:

a) Ausmaße für eine leichte Filtration, die im gereiften Zustand 200 $\mu m \times 30$ $\mu m \pm 50\%$ betragen;

b) hoher Protein- und Lipoidgehalt, wobei die durchschnittliche Zusammensetzung der gesamten (trockenen) Biomasse z.B. von 0,7—1,0 mg/$10^6$ Zellen, 0,2—0,4 Proteinzellen, 0,004—0,4 Kohlehydrat, 0,11—0,3 Lipoidzellen und 0,035 mg/$10^6$ Chlorophyllzellen entspricht;

c) Widerstandsfähigkeit gegen hohe Dosen die ionisierte Strahlen und Konzentrierfähigkeit bis zu $10^2$ mal gewisser Radionukliden, aus der Umgebung;

d) weitgehende Diffusion in verschiedenen natürlichen Umgebungen;

e) guter Widerstand gegen Umweltveränderungen;

f) nicht eng begrenzte Ernährungsanforderung mit Ausnahme für die Konzentration der Vitaminen B und einiger darin enthaltenen Spurenelemente.

4. Anlage nach Anspruch 2, dadurch gekennzeichnet, daß die automatische Kontrolle durch ein Schwimmersystem durchgeführt wird.

5. Anlage nach Anspruch 2, dadurch gekennzeichnet, daß die automatische Kontrolle durch ein elektronisches System durchgeführt wird, das aus der bestehenden Gruppe eines kapazitiven Tips und eines leitenden Tips ausgewählt ist.

6. Anlage nach Anspruch 2, dadurch gekennzeichnet, daß die automatische Kontrolle durch Untraschall durchgeführt wird.

7. Anlage nach Anspruch 2, dadurch gekennzeichnet, daß jede Bausteineinheit aus 20 transparenten Elementen besteht und die Einheiten auf ein gitterförmiges Gerüst angeordnet und miteinander durch Verbindungskurven aus Kunststoff verbunden sind, damit ein schlangenförmiges Strömen des Wassers ermöglicht wird und an der Grundfläche jedes Elementenpaares (3 bis) ein Luftdiffusor eingefügt ist, der ein Regelventil für die Zuführung aufweist und mit einem Druckluftverteiler (4) verbunden ist, damit die erforderliche Belüftung gegeben werden kann.

8. Anlage nach Anspruch 7, dadurch gekennzeichnet, daß die transparenten Bausteinelement rohrförmig sind.

9. Anlage nach Anspruch 7, dadurch gekennzeichnet, daß die Bausteinelement Platten sind.

10. Anlage nach Anspruch 7, dadurch gekennzeichnet, daß das transparente Material der Bausteinelemente des Reaktors aus einer Gruppe, die Glas, Akrylkunststoff, Polykarbonate und Polystyrol umfasst, gewählt ist.

11. Anlage nach Anspruch 2, dadurch gekennzeichnet, daß die Abscheidung der Biomasse und des reagierten Wassers durch Filter erfolgt, die aus der Gruppe gewählt sind, zu denen Sackfilter und unter Vakuum rotierende Filter gehören.

12. Anlage nach Anspruch 11, dadurch gekennzeichnet, daß ein System von zwei nacheinandergeschalteten Filter und ein Zwischenventil vorgesehen ist, wobei die Filter eine Filtrierkapazität von 150 µm und 20 µm haben und das Ventil geeignet ist, das Filtrat des ersten Filters, der die reife Biomasse zurückhält, in zwei Ströme zu trennen und einen dieser Ströme nach dem ersten Bereich zurückzuführen und den anderen Strom dem zweiten Filter zuzuführen, der den Rest der unreifen Biomasse vom gereinigten Wasser abscheidet und daß weiterhin Mittel zum Rückführen der unreifen Biomasse vor der Anlage und zum Entladen der rückgewonnenen reifen Biomasse als vollständig reife Biomasse zur Abgabe von wertvollen Proteinen, Kohlehydraten, Lipoiden und Chlorophyl, vorgesehen sind.

## Revendications

1. Procédé continu perfectionné pour le traitement tertiaire photobiologique des l'eaux useés contenant de l'azote et du phosphore aux quels on additionne prealablement des microquantités de $0,5.10^{-4}$ mg/l à 1 mg/l de vitamines du groupe B et d'oligoéléments (s'ils ne sont pas présents) et on les soumet à l'action métabolique de microorganismes photosynthétiques soigneusement sélectionnés de l'espèce des Phycophyteae, type Algues vertes, à une température allant de +15°C à +30°C, à un pH entre 6,5 et 8, dans un milieu abondamment aéré et illuminé, l'intensité lumineuse allant de 400 à 3000 ft-c (4305—32291 lux), pour un temps de contact réglé de façon expérimentale en fonction de la composition des eaux usées à traiter et du micro-organisme usie particulierement, caractérisé par le fait que l'agent photobiologique (algae) est choisi en fonction de critères morphologiques de façon à présenter à sa maturation les caractéristiques morphologiques suivantes:

a) des dimensions pouvant permettre une filtration aisée étant, à maturation, à 200 µm×30 µm±50%;

b) un contenu élévé de protéines et de lipides, correspondant à la composition moyenne de toute la biomasse (sèche)—c'est-à-dire 0,7—1,0 mg/$10^6$ cellules—à 0,2—0,4, protéines, à 0,004—0,4 d'hydrates de carbone, à 0,11—0,3 lipides et à 0—0,035 mg/$10^6$ cellules de chlorophylle;

c) une résistance à de fortes doses de radiations ionogènes et la capacité de concentrer jusqu'à $10^2$ fois quelques radionucléides du milieu;

d) une vaste disponibilité dans différents milieux naturels;

e) une bonne résistance aux variations dérivant du milieu;

f) des exigences nutritionnelles que ne sont pas strictement limitatives si ce n'est pour la concentration, dans le milieu, de vitamines du groupe B, et de certains oligo-éléments; et par le fait que la biomasse mûre est séparée de l'eau usée traitée à l'aide de deux filtres en série, le premier ne retenant que la biomasse mûre, qui est récupérée, et le second retenant la biomasse non-mûre, qui est recyclée dans la zone de réaction avec une partie de l'eau régénérée.

2. Installation pour le traitement tertiaire continu des eaux usées contenant de l'azote et du phosphore, qui comprend une zone d'alimentation et de contrôle, une zone de réaction et une zone de séparation; la zone d'alimentation comprenant (a) un bassin (1), dont le niveau est automatiquement contrôlé, recueillant l'eau à traiter et la transmettant à la seconde zone, par l'intermédiaire d'une pompe submergée, à travers une canalisation, munie de robinetvanne (s), interceptant le flux, qui règle le débit et les temps de permanence de l'eau usée dans la zone de réaction, un petit dispositif (2) d'alimentation et de dosage de la vitamine B et des oligo-éléments, placé sur ladite canalisation, qui alimente avec une solution concentrée de vitamine B l'eau usée avant que n'ait lieu la réaction photobiologique; caractérisé par le fait que la zone de réaction comprend un réacteur multiple, formé d'unités de réaction modulaires transparentes, placées verticalement, qui sont formées de façon à porter les eaux usées, additionées avec vitamines B, oligoéléments et microorganismes photosyntetiques choisis soignesement à un flux en serpentin, les unités de réaction étant munies de moyens d'insufflation de l'air par le bas; en outre sont aussi prévus des moyens pour l'illumination de 400—3000 ft-c (4305—32291 lux), des moyens pour maintenir à une température de +15°C à +30°C, des moyens pour maintenir un pH de 6,5 à 8; une canalisation conduisant l'eau traitée des réacteurs photobiologiques à un bassin de collectage, en aval du réacteur, et de là, à l'aide d'une pompe submergée controllée par un flotteur automatique, à la zone de séparation comprenant un système de séparation à double filtre, qui sépare la biomasse non-mûre et la biomasse mûre de l'eau assainie de même qu'est prévu le recyclage de la biomasse non-mûre et d'une partie de l'eau assainie en amont de l'installation et l'écoulement de la biomasse mûre et de l'eau tout à fait assainie de l'installation.

3. Installation selon la revendication 2, caractérisée par le fait que l'agent photobiologique est choisi en fonction d'un critère morphologique et précisément en fonction des caractéristiques morphologiques suivantes:

a) des dimensions pouvant permettre une filtration aisée qui correspondent, à maturation, à 200 µm×30 µm±50%;

b) un contenu élévé de protéines et le lipides, correspondant à la composition moyenne de toute la biomasse (sèche)—c'est à dire 0,7—1,0 mg/$10^6$ cellules à 0,2—0,4 protéines, 0,004—0,4 d'hydrates de carbone, 0,11—0,3 lipides et à 0,035 mg/$10^6$ cellules de clorophylle;

c) une résistance à de fortes doses de radiations ionogènes et une capacité de concentrer jusqu'à $10^2$ fois certains radionucléides du milieu;

d) une vaste disponibilité dans différents milieux naturels;

e) une bonne résistance aux variations du milieu;

f) des exigences nutritionnelles qui ne sont pas strictement limitatives si ce n'est pour la concentration de vitamines B et de quelques oligo-éléments dans le milieu.

4. Installation selon la revendication 2, caractérisée par le fait que le contrôle automatique se fait à l'aide d'un système à flotteur.

5. Installation selon la revendication 2, caractérisée par le fait que le contrôle automatique se fait à l'aide d'un système électronique, choisi du groupe qui consist en un type capacitif et en un type conductible.

6. Installation selon la revendication 2, caractérisée par le fait que le contrôle automatique se fait à l'aide d'ultra- sons.

7. Installation selon la revendication 2, caractérisée par le fait que chaque unité modulaire se compose de 20 éléments transparents et que les unités sont placées sur une armature en treillis et qu'elles sont reliées entre elles par des courbes de connexion en matière plastique, de façon à permettre un flux en serpentin de l'eau, et à la base de chaque couple d'éléments (3 bis) est introduit un diffuseur d'air, muni de vanne réglant le débit et relié à un distributeur (4) d'air comprimé, en mesure de fournir au système l'aération désirée.

8. Installation selon la revendication 7, caractérisée par le fait que les éléments modulaires transparents sont tubulaires.

9. Installation selon la revendication 7, caractérisée par le fait que les éléments modulaires sont des plaques.

10. Installation selon la revendication 7, caractérisée par le fait que le matériau transparent des éléments modulaires du réacteur est choisi du groupe du verre, des matériaux acryliques, polycarbonates et polystyrènes.

11. Installation selon la revendication 2, caractérisée par le fait que la séparation de la biomasse et de l'eau qui a réagi se fait à l'aide de filtres, choisis du groupe comportant des filtres à sac et des filtres tournants sous vide.

12. Installation selon la revendication 11, caractérisée par le fait que sont prévu deux filtres en série et un système à vanne intermédiaire, les filtres ayant respectivement une capacité filtrante de 150 µm et 20 µm et la vanne étant en mesure de séparer en deux flux ce qui est filtré par le premier filtre—qui retient la biomasse mûre—et de recycler un desdits flux en amont de la première zone et d'envoyer l'autre flux au second filtre qui sépare le résidu de la biomasse non-mûre de l'eau assainie, et sont aussi prévus des moyens pour recycler en amont de l'installation la biomasse non-mûre et pour décharger la biomasse mûre récupérée comme biomasse entièrement mûre, en mesure de donner des protéines, des hydrates de carbone, des lipides et de la clorophylle de qualité.